Europäisches Patentamt

European Patent Office

Office européen des brevets

(11) Numéro de publication: **0 056 533**
**B1**

# (12) FASCICULE DE BREVET EUROPEEN

(45) Date de publication du fascicule du brevet: **22.05.85**

(21) Numéro de dépôt: **81401082.3**

(22) Date de dépôt: **06.07.81**

(51) Int. Cl.⁴: **A 01 K 11/00**

(54) **Boucle d'identification du bétail.**

(30) Priorité: **31.12.80 FR 8027897**

(43) Date de publication de la demande:
**28.07.82 Bulletin 82/30**

(45) Mention de la délivrance du brevet:
**22.05.85 Bulletin 85/21**

(84) Etats contractants désignés:
**BE CH DE FR GB IT LI NL**

(56) Documents cités:
**EP-A-0 031 227**
**WO-A-82/01639**
**DE-C- 589 107**
**FR-A- 740 203**
**FR-A-1 069 824**
**FR-A-1 360 600**
**FR-A-2 082 837**
**FR-A-2 218 824**
**FR-A-2 435 903**
**FR-A-2 438 420**

(73) Titulaire: **CHEVILLOT**
**119 Rue Vieille du Temple**
**F-75003 Paris (FR)**

(72) Inventeur: **Basson Chevillot, Béatrix**
**10, Avenue Paul Déroulède**
**Vincennes (Val de Marne) (FR)**

(74) Mandataire: **CABINET BONNET-THIRION**
**95 Boulevard Beaumarchais**
**F-75003 Paris (FR)**

Courier Press, Leamington Spa, England.

# Description

Pour l'identification du bétail, on a déjà proposé divers types de boucles qui se posent sur l'oreille de l'animal, par exemple une boucle d'un seul tenant en méal serti telle que décrite dans le DE—C—589 107, ou une boucle tripartite ayant une épingle qui relie une paire d'étiquettes, comme décrit dans le FR—A—1 360 600, ou encore une boucle en deux pièces directement emboîtables, telle que décrite par exemple, entre autres, dans le FR—A—2 218 824.

La présente invention se rapporte à une boucle d'identification du bétail de ce dernier type, se composant de deux pièces en matière plastique souple, emboîtables l'une avec l'autre: une pièce mâle comportant une tige munie d'une tête, formée d'une seule pièce avec cette tige et ayant une pointe dure fixée rigidement à elle, et une piece femelle comportant un oeillet qui est franchi par la tête et derrière lequel cette tête est retenue par accrochage d'un épaulement de la tête sur un épaulement de l'oeillet.

De telles boucles dont la pointe dure facilite la pose sur l'animal, permettent, grâce à la matière souple dont elles sont faites par ailleurs, une libre évolution de l'animal dans la nature au milieu des arbustes et des grillages sans risque d'arrachement de la boucle.

Mais cette matière souple, si avantageuse soit-elle, facilite la fraude. Si le fraudeur réussit à séparer les deux pièces de la boucle dans trop les détériorer et à les ré-assembler sur l'oreille d'un nouvel animal, celui-ci aura un faux pédigrée.

La présente invention a pour objet une boucle d'identification du bétail du type sus-indiqué, qui permet d'éviter la fraude, tout en étant faite d'une matière souple favorisant sa bonne tenue sur l'animal.

Suivant l'invention, cette boucle d'identification du bétail est caractérisée en ce qu'elle comporte, en combinaison, d'une part, un moyen d'inviolabilité an niveau des épaulements de la tête et de l'oeillet et, d'autre part, une coiffe qui prolonge l'oeillet en recouvrant la pointe dure et qui rend le moyen d'inviolabilité inaccessible. Pour fixer les idées, on notera que le moyen d'inviolabilité peut, par exemple être prévu sous forme d'une conicité rentrante de l'un au moins des deux épaulements.

Grâce à la disposition suivant l'invention, si un fraudeur tente de séparer les deux pièces de la boucle, le moyen d'inviolabilité rendu inaccessible par la coiffe rend cette séparation, soit impossible, soit telle qu'il en résulte une rupture de la tête ou l'impossibilité de ré-assembler la boucle, soit encore telle qu'un indice apparaisse sur la boucle ré-assemblée, par exemple un allongement intempestif de la tige, ou sa rupture, permettant de déjouer la fraude.

Le moyen d'inviolabilité suivant l'invention comporte, entre autres un ou plusieurs des agencements suivants:

— Conicité rentrante de l'un au moins des deux épaulements. Cette conicité a pour effet de rendre difficile sinon impossible la séparation des deux parties de la boucle.
— Lèvre saillante prévue sur l'un au moins des deux épaulements. Cette lèvre a également pour effet de s'opposer à la séparation des deux parties de la boucle.
— Relief et/ou creux ménagé dans l'un au moins des deux épaulements. Ce relief ou creux a pour effet d'augmenter la rigidité localement et ainsi de s'opposer à la séparation des deux parties de la boucle.

La coiffe, formant moyen d'inaccessibilité associé au moyen d'inviolabilité, peut avoir toute forme appropriée et consister notamment en on couvercle de fermeture de l'oeillet de la partie femelle.

Des formes d'exécution de boucles, sont ci-après décrites, à titre d'exemple, en référence aux dessins annexés dans lesquels:

la figure 1 est une vue éclatée partialle, en coupe, des deux parties de la boucle avant assemblage, l'épaulement de l'oeillet ayant une conicité rentrante pour rendre la boucle inviolable;

la figure 2 est une vue analogue à la figure 1, mais après assemblage des deux parties de la boucle;

les figures 3, 4, 5, 6 et 7 sont des vues analogues à une partie de la figure 2, mais concernant respectivement cinq variantes du moyens d'inviolabilité appliqué à l'épaulement de l'oeillet;

les figures 8, 9, 10, 11 et 12 concernent respectivement cinq autres variantes du moyen d'inviolabilité appliqué à la tête;

la figure 13 concerne une boucle, dans laquelle, suivant l'invention le moyen d'inviolabilité est complété par un moyen d'inaccessibilité associé à l'oeillet de la partie femelle;

les figures 14 et 15 sont des vues analogues à la figure 13 mais concernent respectivement deux variantes du moyen d'inaccessibilité;

la figure 16 est une vue éclatée en perspective d'une autre variante du moyen d'inaccessibilité;

la figure 17 est une vue correspondante en coupe, en position montée;

la figure 18 concerne une autre variante encore.

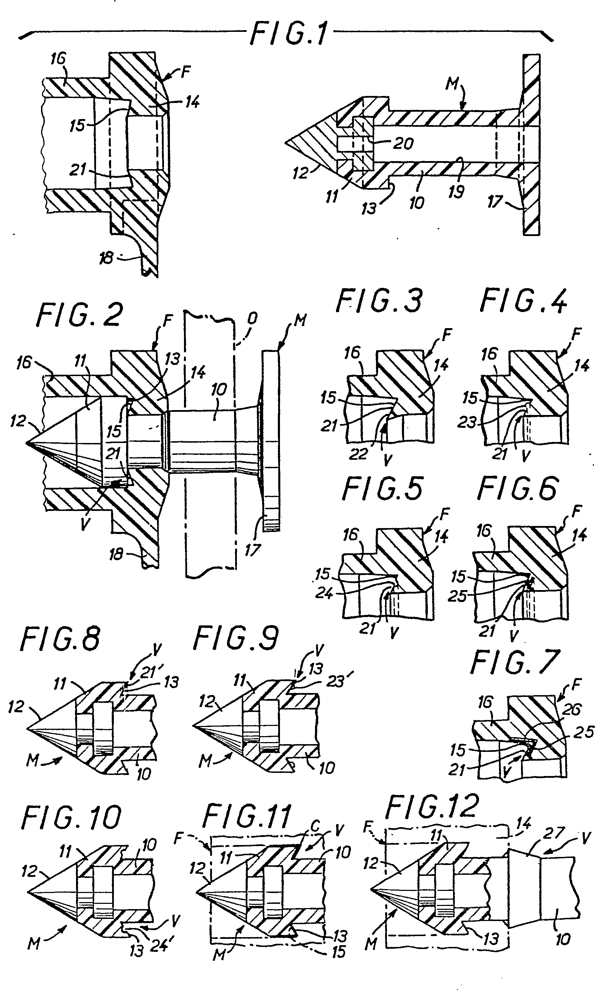

On se rérérer d'abord aux figures 1 et 2 qui concernent une boucle d'identification du bétail.

Cette boucle (figure 1) comporte deux pièces ou parties M et F emboîtables l'une dans l'autre; une partie mâle M ayant une tige 10 munie d'une tête élargie 11, pointue en 12 et définissant un premier épaulement 13, cette tige 10 étant destinée à traverser (figure 2) l'oreille 0 de l'animal; et une partie femelle F, montreé partiellement, ayant un oeillet 14 présentant un deuxième épaulement 15, complémentaire du premier épaulement 13, l'oeillet 14 étant adapté à recevoir (figure 2) la tête 11 accrochée par venue en butée des deux épaulements 13 et 15.

On voit à la figure 2 la boucle formée des deux parties F et M, telle que posée sur l'oreille 0 de l'animal avec la tête 11 accrochée en 13—15 derrière l'oeillet 14.

En outre, dans l'exemple représenté aux figures 1 et 2, la partie femelle F est pourvue d'une jupe cylindrique de protection 16 qui prolonge axialement l'oeillet 14 de façon à entourer la pointe 12 et éviter les risques de blessure par cette pointe 12.

La partie mâle M et la partie femelle F comportent respectivement des plateaux 17 et 18. Le plateau 18 de la partie femelle F n'est représenté que partiellement. Les signes d'identification de l'animal sont portés par l'un et/ou l'autre plateaux 17, 18.

La partie mâle M et la partie femelle F de la boucle sont faites en une matière plastique relativement souple qui permet une bonne tenue de la boucle sur l'orielle 0 de l'animal et évite grâce à la relative flexibilité de la tige 10, un arrachement de la boucle dans les arbustes ou les grillages.

La pointe 12 est faite en une matière plus dure, par exemple plastique ou métal, pour faciliter la pénétration dans l'oreille. La tige 10 est prévue creuse en 19 et la pointe 12 comporte un trou borgne 20 pour permettre la pose de la boucle à l'aide d'un outil approprié.

La boucle M, F comporte un moyen d'inviolabilité V au niveau des épaulements 13—15 d'accrochage de la tête 11 et de l'oeillet 14. Ce moyen d'inviolabilité V est destiné à éviter les fraudes, en empêchant que les parties M et F ne soient séparées l'une de l'autre, en vue du montage de la boucle sur l'oreille d'un nouvel animal. A cet effet, le moyen d'inviolabilité V, soit, rend impossible la séparation des parties M et F, soit, à l'occasion d'un essai de séparation, provoque la rupture de la tête 11, soit rend ensuite impossible le remontage de la boucle, soit encore laisse une trace de la fraude, par exemple par un allongement intempestif de la tige 10.

Dans l'exemple des figures 1 et 2, le moyen d'inviolabilité V consiste en une conicité rentrante 21 de l'épaulement 15 de l'oeillet 14 de la partie femelle F, c'est-à-dire avec une inclinaison de l'épaulement 15 vers l'axe de cette partie femelle F et en direction de la jupe 16.

La conicité rentrante 21 de l'épaulement 15 permet un accrochage particulièrement efficace de la tête 11 derrière l'oeillet 14, rendant difficile, voire impossible, la séparation des parties M et F.

En variante (figure 3) le moyen d'inviolabilité V comporte, non seulement, cette conicité rentrante 21 de l'épaulement 15 de l'oeillet 14 de la partie femelle F, mais également une lèvre 22 prévue sur l'épaulement 15 et saillant vers l'intérieur. Cette lèvre saillante augmente encore la difficulté de séparation des parties M et F.

Dans une autre variante (figure 4) le moyen d'inviolabilité V comporte, non seulement, la conicité rentrante 21 de l'épaulement 15 mais également un relief 23 ménagé sur l'épaulement 15. Ce relief 23 peut avoir toute forme appropriée en section et en contour et a pour effet de rendre très difficile voire impossible, la séparation des parties M et F.

Dans une autre variante (figure 5) le moyen d'inviolabilité V comporte, non seulement la conicité rentrante 21 de l'épaulement 15, mais également un creux 24 ménagé dans l'épaulement 15. Le creux 24 a également pour effet de rendre plus difficile la séparation des pièces M et F.

Dans une autre variante, figure 6, le moyen d'inviolabilité V comporte, non seulement la conicité rentrante 21 de l'épaulement 15, mais également un insert 25 en matière plus dure que celle de la partie femelle F et noyé dans celle-ci au voisinage de l'épaulement 15. L'insert 15 a dans l'exemple de la figure 6, une forme plate ou avantageusement légèrement conique, qui peut avoir toute configuration appropriée, par exemple ondulée ou en éventail ou avec une épaisseur variable.

Dans une autre variante (figure 7) le moyen d'inviolabilité V comporte la conicité rentrante 21 de l'épaulement 15 et un tel insert 25, mais celui-ci a une forme angulaire avec un bord 26 qui est noyé au voisinage de la jupe 16.

Les dispositions qui viennent d'être décrites en référence aux figures 1 et 2, à la figure 3, à la figure 4, à la figure 5, à la figure 6 et à la figure 7 et qui concernent une application du moyen d'inviolabilité à l'épaulement 15 de la partie femelle F peuvent être appliquées à l'épaulement 13 de la partie mâle M.

Le moyen d'inviolabilité V peut d'ailleurs être appliqué soit à l'épaulement 15, soit à l'épaulement 13, soit aux deux épaulements 13 et 15.

On voit à la figure 8 en 21', la conicité rentrante appliquée à l'épaulement 13. L'épaulement 13 est ainsi incliné vers l'axe de la partie mâle M et en direction de la pointe 12.

On voit à la figure 9, le relief 23' appliqué à l'épaulement 13.

On voit à la figure 10 en 24', le creux appliqué à l'épaulement 13.

Dans une autre variante (figure 11) le moyen d'inviolabilité V consiste en un moyen de collage C des deux épaulements 13 et 15. Ce moyen de collage C peut consister en de la colle placée au moment de la pose dans la partie femelle ou mâle par exemple à l'aide d'un applicateur, mais on peut également prévoir sur l'un et/ou l'autre des épaulements 13 et 15 de placer une pastille à un ou deux composants qui se brise lors de la pénétration de la partie mâle dans l'oeillet lors de la pose, entraînant ainsi la colle, et mélangeant immédiatement les deux composants qui se mêlent et réalisent ainsi le collage.

Le collage C permet d'éviter la séparation des parties M et F et, en tout cas, de laisser une trace au cas où un fraudeur tenterait de séparer les parties M et F pour les remonter ensuite sur l'oreille d'un nouvel animal.

Dans une autre variante (figure 12) le moyen d'inviolabilité V consiste en une collerette 27 de la tige 10. Cette collerette 27 est adaptée à pincer l'oeillet 14 entre la collerette 27 et la tête 11. Ainsi il devient très difficile, sinon impossible, de séparer les parties M et F, en vue d'une pose de la boucle sur l'oreille d'un nouvel animal, sans qu'une telle fraude ne laisse de traces.

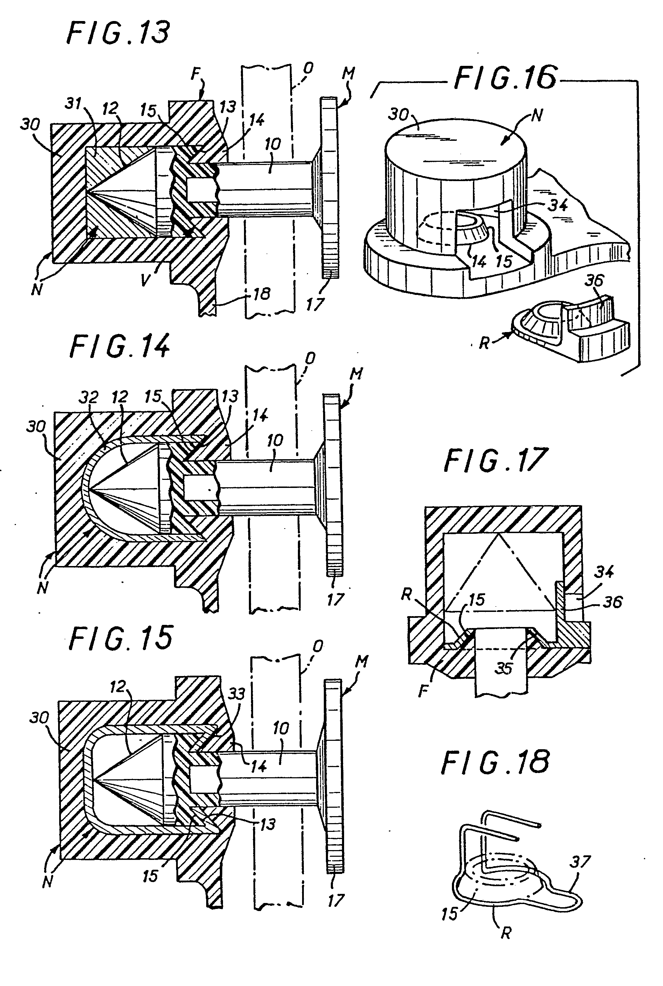

Suivant l'invention (figure 13) la disposition est toujours analogue à celle qui a été précédemment décrite mais le moyen d'inviolabilité V est complété par une coiffe formant moyen d'inaccessibilité N associé à l'oeillet 14 de la partie femelle F.

Dans l'exemple représenté à la figure 13, ce moyen d'inaccessibilité N comporte un couvercle 30 de fermeture de l'oeillet 14 de la partie femelle F et recouvre la pointe dure 12.

De préférence, ce couvercle 30 incorpore des indications codées à lecture optique ou magnétique pour l'identification de l'animal. En outre, une matière appropriée 31, par exemple matière plastique, remplit l'oeillet 14 fermé par le couvercle 30 et entoure la tête 12 de la partie mâle M.

Il est à noter que l'ensemble de l'oeillet 14, du couvercle 30 et de la matière 31 peut être réalisé d'une manière monobloc en une seule pièce.

Ce couvercle 30 peut également être fermé par un cabochon métallique ancré dans la parie femelle. Ce cabochon peut comporter une paroi latérale cylindrique. Toute tentative de fraude serait rendue apparente sur la partie femelle.

On appréciera que le moyen d'inviolabilité V qui, dans l'exemple non limitatif représenté à la figure 13, est du type décrit en référence aux figures 1 et 2 et comporte une conicité des épaulements 13 et 15, permet non seulement d'éviter par luimême des tentatives de fraude mais se trouve renforcé par la présence de couvercle 30 et de la matière 31 qui rendent très difficile sinon impossible un accès frauduleux à la région des épaulements 13 et 15. En outre, une telle tentative d'accès détériorerait inévitablement le couvercle 30 au moins en partie, ce qui dégraderait les indications codées du couvercle 30 et permettrait donc de déceler immédiatement la fraude.

En variante (figure 14), la disposition est analogue à celle qui vient d'être décrite en référence à la figure 13 mais un capuchon 32 est ici prevu et est disposé autour de la tête 12 de la partie mâle M. Ce capuchon 32 s'étend à l'intérieur de l'oeillet 14 fermé par le couvercle 30.

Dans une autre variante (figure 15) le moyen d'inaccessibilité N comporte toujours le couvercle 30 et le capuchon 32, mais celui-ci présente un rebord 33 inséré entre les épaulements 15 et 13 des parties mâle M et femelle F.

Dans une autre variante (figures 16 et 17) le moyen d'inaccessibilité N comporte toujours le couvercle 30 mais l'oeillet 14 fermé par ce couvercle 30, présente une ouverture latérale 34 par laquelle un moyen de renforcement R de l'épaulement 15 de la partie femelle F est adapté à être introduit pour être engagé sur cet épaulement 15. Dans l'exemple représenté au figures 16 et 17, ce moyen de renforcement R consiste en une pièce annulaire 35 adaptée à ceinturer l'épaulement 15 de la partie femelle F et présentant un rebord 36 adapté à masquer l'ouverture latérale 34.

Dans une autre variante encore (figure 18) la disposition est analogue à celle qui vient d'être décrite en référence aux figures 16 et 17, mais le moyen de renforcement R comporte une épingle 37 formée par un fil élastique et adaptée à ceinturer l'épaulement 15 de la partie femelle F se détériorant à la tentative de fraude.

**Revendications**

1. Boucle d'identification du bétail se composant de deux pièces en matière plastique souple emboîtables l'une avec l'autre: une pièce mâle (M) comportant une tige (10) munie d'une tete (11), formèe d'une seule piéce avec la tige et ayant une pointe dure (12) fixée rigidement à elle, et une piece femelle (F) comportant un oeillet (14) qui est franchi par la tête (11) et derrière lequel cette tête (11) est retenue par accrochage d'un épaulement (13) de la tête (11) sur un épaulement (15) de l'oeillet (14), boucle caractérisée en ce qu'elle comporte en combinaison, d'une part, un moyen d'inviolabilité (V) au niveau de ces épaulements (13, 15) et, d'autre part, une coiffe (N) qui prolonge l'oeillet (14) en recouvrant la pointe dure (12) et qui rend le moyen d'inviolabilité (V) inaccessible.

2. Boucle suivant la revendication 1, caractérisée en ce que le moyen d'inviolabilité consiste en une conicité rentrante (21, 21') de l'un au moins des deux épaulements (13, 15).

3. Boucle suivant la revendication 1 ou la revendication 2, caractérisée en ce que le moyen d'inviolabilité V consiste en une lèvre saillante (22) prévue sur l'un au moins des deux épaulements (13, 15).

4. Boucle suivant l'une quelconque des revendications 1 à 3, caractérisée en ce que le moyen d'inviolabilité (V) comporte un relief (23) et/ou un creux (24) ménagé dans l'un au moins des deux épaulements (13, 15).

5. Boucle suivant l'une quelconque des revendications 1 à 4, caractérisée en ce qu'un insert (25) en matière plus dure que celle de la boucle est noyé dans celle-ci au voisinage de l'un au moins des deux épaulements (13, 15).

6. Boucle suivant la revendication 5, caractérisée en ce que l'insert (25) a une forme plate.

7. Boucle suivant la revendication 5, caractérisée en ce que l'insert (25) a une forme conique.

8. Boucle suivant la revendication 5, caractérisée en ce que le dit insert (25) a une forme angulaire.

9. Boucle suivant l'une quelconque des revendications 1 à 8, caractérisée en ce qu'un moyen de collage (C) est prévu entre les deux épaulements (13, 15).

10. Boucle suivant l'une quelconque des revendications 1 à 9, caractérisée en ce que la tige (10) présente une collerette (27) adaptée à pincer l'oeillet (14) entre elle et la tête 11.

11. Boucle suivant la revendication 1, caractérisée en ce que la coiffe (N) consiste en un couvercle (30) de fermeture de l'oeillet (14) de la partie femelle (F).

12. Boucle suivant la revendication 11, caractérisée en ce qu'une matière de remplissage (31) est disposée à l'intérieur du couvercle (30) et entoure la tête (12) de la partie mâle (M).

13. Boucle suivant la revendication 11, caractérisée en ce qu'un capuchon (32) est disposé autour de la tête (12) de la partie mâle (M) à l'intérieur de l'oeillet (14) fermé par le couvercle (30).

14. Boucle suivant la revendication 13, caractérisée en ce que le capuchon (32) comporte un rebord (33) inséré entre les épaulements (13, 15) des parties mâles (M) et femelle (F).

15. Boucle suivant la revendication 11, caractérisée en ce que l'oeillet (14) fermé par le couvercle (30) comporte une ouverture latérale (34) par laquelle un moyen de renforcement (R) de l'épaulement (15) de la partie femelle F est adapté à être introduit pour être engagé sur cet épaulement (15).

16. Boucle suivant la revendication 15, caractérisée en ce que ce moyen de renforcement R consiste en une pièce annulaire (35) adaptée à ceinturer l'épaulement (15) de la partie femelle F et présentant un rebord (36) adapté à masquer l'ouverture latérale (34).

17. Boucle suivant la revendication 15, caractérisée en ce que le moyen de renforcement (R) comporte une épingle (37) formée par un fil élastique et adaptée à ceinturer l'épaulement (15) de la partie femelle F.

**Patentansprüche**

1. Viehkennzeichnungsmarke, bestehend aus zwei Teilen aus elastischem Kunststoffmaterial, welche zusammenfügbar sind, wobei ein "männliches" Teil (M) einen Schaft (10) aufweist, der mit einem Kopf (11) versehen ist, der mit dem Schaft einstückig ausgebildet ist und eine feste Spitze (12) aufweist, die fest mit diesem verbunden ist, und ein "weibliches" Teil (F) eine Öse (14) aufweist, die von dem Kopf (11) durchsetzt wird und hinter welcher der Kopf (11) durch Verhaken mit einer Schulter des Kopfes (11) auf einer Schulter (15) der Öse (14) festgehalten wird, gekennzeichnet durch die Kombination der Merkmale einer Einrichtung (V) zur Herstellung einer ohne Beschädigung nicht zu trennenden Verbindung in Höhe dieser Schulten (13, 15) einerseits und eine Kappe (N) andererseits, die die Öse (14) verlängert und dabei die feste Spitze (12) abdeckt und die Verbindungseinrichtung (V) unzugänglich macht.

2. Marke nach Anspruch 1, dadurch gekennzeichnet, daß die Verbindungseinrichtung (V) eine zurückspringende Konizität (21, 21') an wenigstens einer der Schultern (13, 15) aufweist.

3. Marke nach Anspruch 1 oder 2, dadurch gekennzeichnet, daß die Verbindungseinrichtung (V) aus einer vorstehenden Fase (22) besteht, die an wenigstens einer der beiden Schultern (13, 15) vorgesehen ist.

4. Marke nach einem der Ansprüche 1 bis 3, dadurch gekennzeichnet, daß die Verbindungseinrichtung (V) aus einer Erhebung (23) und/oder einer Ausnehmung (24) besteht, die wenigstens in einer der beiden Schultern (13, 15) ausgebildet ist.

5. Marke nach einem der Ansprüche 1 bis 4, dadurch gekennzeichnet, daß ein Einsatz (25) aus einem festeren Material als dem der Marke in dieser in Nähe wenigstens einer der beiden Schultern (13, 15) eingesetzt ist.

6. Marke nach Anspruch 5, dadurch gekennzeichnet, daß der Einsatz (25) eine ebene Gestalt aufweist.

7. Marke nach Anspruch 5, dadurch gekennzeichnet, daß der Einsatz (25) eine konische Gestalt aufweist.

8. Marke nach Anspruch 5, dadurch gekennzeichnet, daß der Einsatz (25) eine winkelige Gestalt aufweist.

9. Marke nach einem der Ansprüche 1 bis 8, dadurch gekennzeichnet, daß eine Verklebungseinrichtung (C) zwischen den beiden Schultern (13, 15) vorgesehen ist.

10. Marke nach einem der Ansprüche 1 bis 9, dadurch gekennzeichnet, daß der Schaft (10) einen Kragen oder Bund (27) aufweist, so daß die Öse (14) zwischen dem Kragen oder Bund und dem Kopf (11) eingeklemmt werden kann.

11. Marke nach Anspruch 1, dadurch gekennzeichnet, daß die Kappe (N) aus einem Deckel (30) zum Verschließen der Öse (14) des "weiblichen" Teils (F) besteht.

12. Marke nach Anspruch 11, dadurch gekennzeichnet, daß ein Füllmaterial (31) im Inneren des Deckels (30) und um Kopf (12) des "männlichen" Teils (M) vorgesehen ist.

13. Marke nach Anspruch 11, dadurch gekennzeichnet, daß eine Schutzkappe (32) um den Kopf (12) des "männlichen" Teils (M) im Inneren der Öse (14) angeordnet ist, welche von dem Deckel (30) abgeschlossen wird.

14. Marke nach Anspruch 13, dadurch gekennzeichnet, daß die Schutzkappe (32) einen umgebogenen Rand (33) aufweist, der zwischen den Schultern (13, 15) des "männlichen" Teils (M) und "weiblichen" Teils (F) eingesetzt ist.

15. Marke nach Anspruch 11, dadurch gekennzeichnet, daß die von dem Deckel (30) agbeschlossene Öse (14) eine seitliche Öffnung (34) aufweist, durch welche ein Verstärkungsteil (R) für die Schulter (15) des "weiblichen" Teils (F) eingesetzt werden kann, um an dieser Schulter (15) in Anlage gebracht zu werden.

16. Marke nach Anspruch 15, dadurch gekennzeichnet, daß das Verstärkungsteil (R) aus einem ringförmigen Teil (35) besteht, welches die Schulter (15) des "weiblichen" Teils (F) einfaßt und welches einen Rand (36) aufweist, welcher die Seitenöffnung (34) verdecken kann.

17. Marke nach Anspruch 15, dadurch gekennzeichnet, daß das Verstärkungsteil (R) aus einer Nadel (37) besteht, die aus einem elastischen Draht geformt ist und die Schulter (15) des "weiblichen" Teils (F) umklammert.

**Claims**

1. Indentation tag for livestock, formed of two pieces of flexible plastics material which can be interlocked one with the other: male piece (M) comprising a stem (10) provided with a head (11), formed in a single piece with the stem and having a hard point (12) rigidly fixed thereto, and a female piece (F) comprising an eyelet (14) through which passes the head (11) and behind which this head (11) is retained by hooking a shoulder (13) of the head (11) on a shoulder (15) of the eyelet (14), the tag characterised in that it comprises, in combination, on the one hand a removal-proof means (V) at the level of the shoulders (13, 15) and on the other hand a cap (N) which prolongs the eyelet (14), covering the hard point (12) thereof and which renders the removal-proof means (V) inaccessible.

2. Tag according to Claim 1, characterised in that the removal-proof means consists of a reverse conicity (21, 21') of at least one of the two shoulders (13, 15).

3. Tag according to Claim 1 or Claim 2, characterised in that the removal-proof means (V) consists of a projecting lip (22) provided on at least one of the two shoulders (13, 15).

4. Tag according to any one of Claims 1 to 3, characterised in that the removal-proof means (V) comprises a raised portion (23) and/or a recess (24) formed in at least one of the two shoulders (13, 15).

5. Tag according to any one of Claims 1 to 4, characterised in that an insert (25) of a material harder than that of the tag is embedded in the latter in the vicinity of at least one of the two shoulders (13, 15).

6. Tag according to Claim 5, characterised in that the insert (25) has a flat shape.

7. Tag according to Claim 5, characterised in that the insert (25) has a conical shape.

8. Tag according to Claim 5, characterised in that the said insert (25) has an angular shape.

9. Tag according to any one of Claims 1 to 8, characterised in that a means of adhesion (C) is provided between the two shoulders (13, 15).

10. Tag according to any one of Claims 1 to 9, characterised in that the stem (10) possesses a collar (27) arranged to grip the eyelet (14) between itself and the head (11).

11. Tag according to Claim 1, characterised in that the cap (N) consists of a lid (30) for closing the eyelet (14) of the female part (F).

12. Tag according to Claim 11, characterised in that a filling substance (31) is disposed within the lid (30) and surrounds the head (12) of the male part (M).

13. Tag according to Claim 11, characterised in that a hood (32) is arranged around the head (12) of the male part (M) within the eyelet (14) closed by the lid (30).

14. Tag according to Claim 13, characterised in that the hood (32) comprises a rim (33) inserted between the shoulders (13, 15) of the male (M) and female (F) parts.

15. Tag according to Claim 11, characterised in that the eyelet (14) closed by the lid (30) comprises a lateral aperture (34) through which a reinforcing means (R) of the shoulder (15) of the female part (F) is arranged to be inserted in order to be engaged on this shoulder (15).

16. Tag according to Claim 15, characterised in that said reinforcing means (R) consists of an annular piece (35) arranged to surround the shoulder (15) of the female part (F) and having a rim (36) arranged to mask the lateral aperture (34).

17. Tag according to Claim 15, characterised in that the reinforcing means (R) comprises a pin (37) formed by a flexible wire and arranged to surround the shoulder (15) of the female part (F).

FIG.1
FIG.2
FIG.3
FIG.4
FIG.5
FIG.6
FIG.8
FIG.9
FIG.7
FIG.10
FIG.11
FIG.12

0 056 533

FIG.13

FIG.16

FIG.14

FIG.17

FIG.15

FIG.18

2